# EUROPEAN PATENT SPECIFICATION

(11) **EP 3 685 668 B1**
(45) Date of publication and mention of the grant of the patent: **31.12.2025**
(21) Application number: 18859305.7
(22) Date of filing: 17.09.2018
(51) Int. Cl.: A01N 43/82, A01G 7/06, A01G 17/00, A01G 29/00

(54) **COMPOSITION COMPRISING ACIBENZOLAR-S-METHYL AS EFFECTIVE INGREDIENT FOR CONTROLLING BURSAPHELENCHUS XYLOPHILUS DISEASE AND METHOD FOR CONTROLLING BURSAPHELENCHUS XYLOPHILUS USING SAME**
ZUSAMMENSETZUNG MIT ACIBENZOLAR-S-METHYL ALS WIRKSTOFF ZUR BEKÄMPFUNG VON BURSAPHELENCHUS-XYLOPHILUS-BEFALL UND VERFAHREN ZUR BEKÄMPFUNG VON BURSAPHELENCHUS-XYLOPHILUS-BEFALL DAMIT
COMPOSITION COMPRENANT DE L'ACIBENZOLAR-S-MÉTHYLE EN TANT QUE PRINCIPE ACTIF POUR LUTTER CONTRE LA MALADIE CAUSÉE PAR BURSAPHELENCHUS XYLOPHILUS ET PROCÉDÉ DE LUTTE CONTRE BURSAPHELENCHUS XYLOPHILUS L'UTILISANT

(30) Priority: 19.09.2017 KR 20170120206
(43) Date of publication of application: 29.07.2020
(73) Proprietor: Industry Foundation of Chonnam National University, Gwangju 61186 (KR); Pusan National University Industry-University Cooperation Foundation, Busan 46241 (KR)
(72) Inventor: KIM, Jin-Cheol, Gwangju 61105 (KR); PARK, Ae Ran, Cheonan-si Chungcheongnam-do 31194 (KR); JEON, Hee Won, Gwangju 61184 (KR); JEONG, Se-In, Gwangju 61451 (KR); SEO, Young-Su, Busan 46233 (KR); KIM, Namgyu, Changwon-si Gyeongsangnam-do 51499 (KR); KIM, Junheon, Dongducheon-si Gyeonggi-do 11342 (KR); KOH, Sang-Hyun, Suwon-si Gyeonggi-do 16325 (KR); LEE, Seung Kyu, Seoul 05037 (KR)
(74) Representative: Ipsilon
(86) International application number: PCT/KR2018/010908
(87) International publication number: WO 2019/059599

(56) References cited:
- JP-A- 2013 249 278
- KR-B1- 101 627 829
- V PARKUNAN ET AL: "INFLUENCE OF ACIBENZOLAR-S-METHYL AND MIXTURE OF BACILLUS SPECIES ON GROWTH AND VIGOR OF CULTIVATED TOBACCO", TOBACCO SCIENCE, 1 January 2011 (2011-01-01), pages 7 - 14, XP055083744, Retrieved from the Internet <URL:http://www.tobaccoscienceonline.org/doi/pdf/10.3381/10-010.1> [retrieved on 20131014], DOI: 10.3381/10-010.1
- JEON ET AL: "Control of pine wilt disease by foliar application of plant resistance inducers, acibenzolar-S-methyl and methyl salicylic acid", 31 January 2018 (2018-01-31), pages 1 - 39, XP009519529, Retrieved from the Internet <URL:http://www.riss.kr/link?id=T14748561>
- LI SHU-FEN ET AL: "Effects of Salicylic Acid on the Induced Resistance of Japanese Black Pine Seedlings to Pine Wilt Disease", vol. 29, no. 6, 1 January 2005 (2005-01-01), pages 49 - 53, XP009527027, ISSN: 1000-2448, Retrieved from the Internet <URL:http://caod.oriprobe.com/articles/9406699/Effects_of_Salicylic_Acid_on_the_Induced_Resistance_of_Japanese_Black_.htm>
- OOSTENDORP MICHAEL ET AL: "Induced Disease Resistance in Plants by Chemicals", vol. 107, no. 1, 1 January 2001 (2001-01-01), NL, pages 19 - 28, XP055796735, ISSN: 0929-1873, Retrieved from the Internet <URL:https://link.springer.com/content/pdf/10.1023/A:1008760518772.pdf> DOI: 10.1023/A:1008760518772
- MOLINARI S ET AL: "Induction of resistance to root-knot nematodes by SAR elicitors in tomato", CROP PROTECTION, ELSEVIER SCIENCE, GB, vol. 29, no. 11, 1 November 2010 (2010-11-01), pages 1354 - 1362, XP027272086, ISSN: 0261-2194, [retrieved on 20100803]
- WALTERS, DALE R. ET AL.: "Controlling Crop Diseases Using Induced Resistance: Challenges for the Future", JOUNAL OF EXPERIMENTAL BOTANY, vol. 64, no. 5, 2013, pages 1263 - 1280, XP055067978
- CHINNASRI, B. ET AL.: "Effects of Acibenzolar-S-Methyl Application to Rotylenchulus Reniformis and Meloidogyne Javanica", JOURNAL OF NEMATOLOGY, vol. 35, no. 1, 2003, pages 110 - 114, XP055619308
- JEON, HEE-WON: "Control of pine wilt disease by foliar application of plant resistance inducers, acibenzolar-S-methyl and methyl salicylic acid", MASTER'S THESIS OF AGRICULTURE, February 2018 (2018-02-01), KOREA, pages 1 - 39, XP009519529

## Description

### TECHNICAL FIELD

The present invention relates to the use of a composition for controlling pine wilt disease comprising acibenzolar-S-methyl or an agrochemically acceptable salt thereof as an effective component, and a method for controlling pine wilt disease using the composition.

### BACKGROUND ART

Pine wilt disease caused by *Bursaphelenchus xylophilus* inflicts destructive damage in pine trees worldwide. Recently, with an environmental change of forest ecosystem caused by recent climate changes, pine wilt disease is a complex and rapidly spreading. Although *Bursaphelenchus xylophilus* is known as the main causal agent of the pine wilt disease, it is a hardly controllable because it kills pine trees by complicated interactions among hosts, pathogens, insect vectors, and environmental factors. Once infected with *Bursaphelenchus xylophilus,* almost every pine tree will die regardless of treatment. Furthermore, it is known that not only the tress of the genus *Pines* but also the several tree species of the genus *Abiea,* the genus *Picea,* and the genus *Larix* are infected by *Bursaphelenchus xylophilus.* In South Korea, it is reported that, in Gyeongsang Province, Jeolla Province, and Gangneung area, this disease occurs mainly in pine trees, while, in the western part of Gangwon Province and Gyeonggi Province, this disease occurs mainly in nut pine trees (i.e., *Pinus koraiensis*)*.*

Various methods have been suggested for controlling the pine wilt disease. However, as a method for prevention of the disease, trunk injection is almost the only method that is currently available. However, avermectin and emamectin benzoate, which are widely used as trunk injection chemicals, have short effectiveness duration of 2 years and a limited injection time. In addition, Green-guard of Japanese product is expensive so that there is a limit to universal applications. Therefore, trunk injection is difficult to apply to prevent the pine wilt disease of numerous pine trees over broad areas. Especially, in case of the pine forest located in high-mountain areas, which is not easily accessible, trunk injection is not considered to be an effective method. Moreover, it has been reported by Kuroda and Kenmochi (2016, Pine Wilt Disease Conference - IUFRO) that repeated trunk injection of a nematicidal agent to control the pine wilt disease may rather cause the death of uninfected pine trees with pine wilt nematodes.

Accordingly, it is urgently needed to develop a chemical formulation that can be used for effective control which is able to apply in a broad region, such as soil drench, or foliar spray. In case of pine trees, the induced resistance was found out by Kosaka and others (2001, XXI IUFRO World Congress) and also by Takeuchi and others (2006, Nematology, 8: 435-442), i.e., when *Bursaphelenchus xylophilus* are inoculated after injecting non-pathogenic nematodes to pine trees, onset of the disease is delayed. This result indicates that the pine wilt disease can be controlled at certain level if the resistance is induced in pine trees. Recently, it was reported by Hirao and others that, as a result of comparing the expressed genes of the varieties that are either sensitive or resistant to *Bursaphelenchus xylophilus, PR-9, PR-10*, and the cell wall-related gene (e.g. for hydroxyproline-rich glycoprotein precursor and extensin) are highly up-regulated in the resistance pine varieties, indicating that the similar resistance mechanism as common crops may be present in pine trees (2012: BMC Plant Biology 12: 13)

In WO2015/141867 and WO2009/081851, use of acibenzolar-S-methyl as a bactericidal agent and a pesticidal agent in a composition for controlling plant disease is described. In WO2012/072660, use of acibenzolar-*S*-methyl as a compound for inducing the host defense is described. In Li Shu-fen et al. (Journal (Natural Science Edition), vol 29, no. 6, 2005, pages 49-53) use of salicylic acid on the induced resistance of Japanese black pine seedling to pine wilt disease is described. Oostendorps Michael et al. (European Journal of Plant Pathology, vol 107, no. 1, 2001, pages 19-28) relates to induced disease resistant in plants by chemicals. Molinari S et al. (Crop Protection, vol. 29, no. 11, pages 1354-1362) relates to the induction of resistance to root-knot nematodes by SAR (systemic acquired resistance) elicitors in tomato. However, no mention is made regarding the control effect of acibenzolar-*S*-methyl against *Bursaphelenchus xylophilus* as a main causal agent of the pine wilt disease as it is described in the present invention, and in the previous inventions the plants studied as a subject are limited to vegetables and crops like tomato. Furthermore, a technique for controlling the pine wilt disease by utilizing the induced resistance against woody plants like pine tree is not described in the above documents.

### DETAILED DESCRIPTION OF THE INVENTION

### TECHNICAL PROBLEMS TO BE SOLVED

The present invention is devised under the circumstances described above. Specifically, based on the various materials that are known to induce the resistance in plants, continuous studies are made in the present invention to select a chemical elicitor and its formulation enabling effective control of the pine wilt disease. As a result, in pine trees, acibenzolar-S-methyl is found to be a material that can induce the resistance against pine wilt disease, and it is shown by various methods that this material actually exhibits an induced resistance activity in pine trees.

In particular, as a result of determining the efficacy of acibenzolar-S-methyl in pine wilt disease by three different treatment methods, i.e., trunk injection, foliar spraying, and soil drenching, it was found that acibenzolar-*S*-methyl treatments by soil drenching has a significantly higher control rate of the pine wilt disease compared to its trunk injection method.

Based on the above results, it is recognized that, by using an induced resistance material, not only the pine wilt disease can be prevented at much lower cost compared to existing chemical agents but also the range of choice for application strategies the pine wilt disease with a preventive formulation is broadened, i.e., from the trunk injection to other methods, so that the application range of the preventive formulation for pine wilt disease can also become wide to yield a more effective controlling method, and the present invention is completed accordingly.

### TECHNICAL MEANS FOR SOLVING THE PROBLEMS

In order to solve the problems that are described above, the present invention provides the use of a composition for controlling pine wilt disease in plant comprising acibenzolar-S-methyl or an agrochemically acceptable salt thereof as an effective component.

The present invention further provides a method for controlling pine wilt disease comprising treating a tree planting plot or field with the composition for controlling pine wilt disease.

The present invention further provides a method for preventing or treating pine wilt disease characterized by treating a red pine tree *(Pinus densiflora)* or black pine tree *(Pinus thunbergii)* cultivation plot or field with the composition for controlling pine wilt disease.

The present invention further provides the use of a composition for soil drenching or foliar spraying treatment to control pine wilt disease comprising acibenzolar-S-methyl or an agrochemically acceptable salt thereof as an effective component.

The present invention still further provides the use of a composition for eliciting the induced resistance against pine wilt disease comprising acibenzolar-S-methyl or an agrochemically acceptable salt thereof as an effective component.

### ADVANTAGEOUS EFFECT OF THE INVENTION

According to the present invention, acibenzolar-S-methyl exhibits an efficacy against the pine wilt disease according to a treatment by trunk injection, foliar spraying, or soil drenching. It was also confirmed that acibenzolar-S-methyl has not *in vitro* nematicidal activity against pine wilt nematodes and the efficacy of acibenzolar-S-methyl against the pine wilt disease is due to induction of resistance in pine trees. The induced resistance is effective even with a small amount in general and exhibits the effect based on a mechanism by which defense-related genes are expressed in pine trees, and thus there is no adverse effect on the human health and environment. For these reasons, an eco-friendly chemical formulation can be developed for pine wilt disease, and, by taking advantage of the induced resistance, it is highly possible to develop a new-concept control agent for pine wilt disease. In addition, as the trunk injection of a nematicidal agent, which has been conventionally used to control the pine wilt disease, can be replaced by soil drenching or foliar spraying of the induced resistance formulation, there is an advantage that these effective control strategies can make the management of the pine wilt disease at low cost and the application range of the formulation for controlling pine wilt disease can be extended.

### BRIEF DESCRIPTION OF THE DRAWINGS

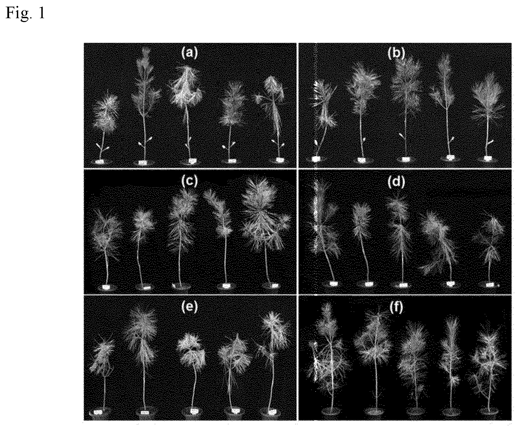

Fig. 1 shows the control efficacy of acibenzolar-*S*-methyl against pine wilt disease in red pine tree (*Pinus densiflora*); (a) trunk injection of acibenzolar-*S*-methyl at 10,000 *µ*g/mℓ, (b) trunk injection of acibenzolar-*S*-methyl at 200 *µ*g/mℓ, (c) soil drenching of acibenzolar-*S*-methyl, (d) foliar spraying of acibenzolar-S-methyl, (e) non-treatment group, and (f) non-inoculation group.

### BEST MODE(S) FOR CARRYING OUT THE INVENTION

To achieve the purpose of the present invention, the present invention provides the use of a composition for controlling pine wilt disease in plant comprising acibenzolar-S-methyl or an agrochemically acceptable salt thereof as an effective component.

According to the present invention, in the process of carrying out a study on the mechanism for controlling pine wilt disease, it is found that a specific induced resistance elicitor plays a key role in inducing the resistance of a pine tree, which are the host of pine wilt disease not studied before, and the pine wilt disease can be controlled by using the material.

Among the induced resistance elicitors used in the present invention, acibenzolar-S-methyl shows the controlling effect against the pine wilt disease by inducing the resistance in a host plant, and it exhibits the controlling effect even under soil drenching by which well-known avermectin-based chemicals like emamectin benzoate do not show any activity at all. This finding is the first invention in the world, and, by using the induced resistance material, the pine wilt disease can be prevented at much lower cost compared to existing chemical agents and the application methods of the preventive formulation for pine wilt disease control can be extended, i.e., from the trunk injection to other methods, so that management strategies for treating the pine wilt disease with a preventive formulation can be spoiled for choice.

The composition for controlling pine wilt disease of the present invention can be an induced resistance material that can induce the resistance by accumulating salicylic acid in a host plant of pine wilt disease.

In the composition for controlling pine wilt disease according to one embodiment of the present invention, the agrochemically acceptable salt of acibenzolar-S-methyl may include, for example, a metal salt, a salt with organic base, a salt with inorganic acid, a salt with organic acid, and a salt with acidic amino acid. Examples of the suitable metal salt may include an alkali metal salt such as sodium salt or potassium salt; an alkali earth metal salt such as calcium salt, magnesium salt, or barium salt; and aluminum salt or the like. Examples of the salt with organic base may include a salt with trimethylamine, triethylamine, pyridine, picoline, 2,6-lutidine, ethanolamine, diethanolamine, triethanolamine, cyclohexylamine, dicyclohexylamine, N,N-dibenzylethylenediamine, or the like. Examples of the salt with inorganic acid include a salt with hydrochloric acid, hydrogen bromide acid, nitric acid, sulfuric acid, phosphoric acid, or the like. Examples of the salt with organic acid include a salt with formic acid, acetic acid, trifluoroacetic acid, phthalic acid, fumaric acid, oxalic acid, tartaric acid, maleic acid, citric acid, succinic acid, methane sulfonic acid, benzene sulfonic acid, p-toluene sulfonic acid, or the like. Examples of the salt with acid amino acid include a salt with aspartic acid, glutamic acid, or the like.

The composition for controlling pine wilt disease according to one embodiment of the present invention may comprise an agrochemically acceptable carrier and/or vehicle. The vehicle to be comprised in the composition of the present invention is a vehicle which is commonly used in the field of agriculture, and, it may further include, for example, a solid carrier and filler including oxides such as diatomaceous earth or calcined lime, phosphate salts such as apatite, sulfate salts such as gypsum, mineral powder such as clay, kaolin, bentonite, acid white clay, quartz, or silica, an anti-coagulant, a surfactant, an emulsifier, a preservative, or the like. Furthermore, the composition of the present invention may be formulated by using a method well known in the pertinent art such that the active component can be released in a rapid, slow, or sustained manner upon a treatment on a plant. For having a formulation, preparation can be made to have various forms such as concentrate, suspension, oil formulation, emulsion, microemulsion, liquid, dispersible liquid formulation, granule concentrate, granule formulation, powder formulation, liquid concentrate, water-floating granule formulation, or tablet after mixing the active component with an additive like surfactant, diluent, dispersion agent, auxiliary agent or the like that are commonly used for preparing a formulation.

The composition for controlling pine wilt disease according to the present invention may be produced, for example, as solution that can be directly sprayed, powder or suspension form, highly concentrated aqueous, oily or other suspension, dispersion, emulsion, oil dispersion, paste, dust, sprinkle material, or granule formulation, but it is not limited thereto. Furthermore, the composition for controlling pine wilt disease can be used by ejecting, spraying, sprinkling, scattering, or pouring. The usage form depends on desired purpose, and, in any case, it should be the form allowing that distribution of the composition of the present invention is fine and homogeneous as much as possible.

The composition for controlling pine wilt disease according to the present invention may be formulated in various forms. The formulation can be prepared by adding a solvent and/or a carrier, etc. The formulation is often admixed with an inactive additive and a surface-active material, for example, an emulsifier or a dispersion agent. Examples of the suitable surface-active material can be an alkali metal, an alkaline metal salt, or an ammonium salt of aromatic sulfonic acid (e.g., lignosulfonic acid, phenol-sulfonic acid, naphthalene- and dibutyl naphthalene sulfonic acid), fatty acid, alkyl- and alkylaryl sulfonate, alkyl lauryl ether, or fatty alcohol sulfate, a salt of sulfated hexa-, hepta- and octadecanol, or fatty alcohol glycol ether, a condensate of naphthalene sulfonate or derivatives thereof and formaldehyde, a condensate of naphthalene or naphthalene sulfonate, phenol and formaldehyde, a condensate of polyoxyethylene octyl phenol, ethoxylated isooctyl-, octyl- or nonyl phenol, alkyl phenyl or tributyl phenyl polyglycol ether, alkylaryl polyether alcohol, isotridecyl alcohol, fatty alcohol/ethylene oxide, ethoxylated castor oil, polyoxyethylene alkyl ether or polyoxypropylene, lauryl alcohol polyglycol ether acetate, sorbitol ester, lignin-sulfide waste liquid or methyl cellulose, but it is not limited thereto.

The suitable solid carrier material is, in principle, all porous, and it can be an agriculturally acceptable carrier, for example, mineral soils (e.g., silica, silica gel, silicate, talc, kaolinite, lime stone, lime, chalk, loess, clay, dolomite stone, diatomaceous earth, calcium sulfate, magnesium sulfate, magnesium oxide, and pulverized synthetic materials), fertilizer (ammonium sulfate, ammonium phosphate, ammonium nitrate, and urea), plant products (e.g., grain powder, tree bark powder, wood meal, and nut shell powder), or cellulose powder, but it is not limited thereto. Furthermore, the solid carrier may be used either singly or as a mixture of two or more kind thereof.

To enhance the absorption into a plant and the effect, the composition for controlling pine wilt disease according to the present invention can be also used after mixing it with a diffusing agent and a permeating agent, or a surfactant.

When the composition is applied for management of pine wilt disease, the host plant may belong to genus *Pinus,* genus *Abies,* genus *Picea,* or genus *Larix,* and preferably genus *Pinus,* but it is not limited thereto.

The present invention further provides a method for controlling pine wilt disease comprising treating a tree planting plot or field with the composition for controlling pine wilt disease.

With regard to the method according to one embodiment of the present invention, the treatment with acibenzolar-*S*-methyl may elicit induced resistance in a pine tree, but it is not limited thereto.

With regard to the method according to one embodiment of the present invention, the pine tree may be a red pine tree *(Pinus densiflora)* or sea pine tree *(Pinus thunbergii),* but it is not limited thereto.

With regard to the method according to one embodiment of the present invention, the treatment with acibenzolar-*S*-methyl may be a trunk injection treatment, a soil drenching treatment, or a foliar spraying treatment, preferably a soil drenching treatment or a foliar spraying treatment, but it is not limited thereto.

The present invention further provides a method for preventing or treating pine wilt disease characterized by treating a red pine tree *(Pinus densiflora)* or black pine tree *(Pinus thunbergii)* cultivation plots and fields with the composition for controlling pine wilt disease. The method of the present invention is not limited as long as the method is carried out for a plant which is in need of the control of pine wilt disease. For example, the composition of the present invention may be treated on a cultivation site of genus *Pinus,* genus *Abies,* genus *Picea,* or genus *Larix,* and preferably a cultivate site of red pine tree *(Pinus densiflora)* or black pine tree *(Pinus thunbergii).* The treatment method is preferably soil drenching or foliar spraying, but it is not limited thereto.

The present invention further provides the use of a composition for soil drenching or foliar spraying treatment to control pine wilt disease comprising acibenzolar-S-methyl or an agrochemically acceptable salt thereof as an effective component.

The present invention still further provides the use of a composition for eliciting the induced resistance against pine wilt disease comprising acibenzolar-S-methyl or an agrochemically acceptable salt thereof as an effective component.

Hereinbelow, the present invention is explained in greater detail in view of the Examples. However, it is evident that the following Examples are given only for exemplification of the present invention and by no means the present invention is limited to the following Examples.

### EXAMPLES

### Example 1. Selection of induced resistance material for controlling pine wilt disease

By using the 15 types of an induced resistance elicitors which have been known to induce the plant resistance against various diseases as candidates, their controlling effect against pine wilt disease was examined. The control efficacy of candidates against pine wilt disease was analyzed according to an *in vivo* test using red pine tree (*Pinus densiflora*) which was 2-year old young pine trees (diameter of 5.5 mm or so, and height of about 35 mm).

As a candidate group of an induced resistance material, two kinds of acibenzolar-S-methyl (ASM), TDL (Tiadinil), ITL (Isotianil), PBZ (Probenzole), AZO (Azoxystrobin), VMA (Validamycin A), MeJA (Methyl jasmonate), BABA (DL-3-aminobutyric acid), 2,3-BDO (2,3-Butanediol), SA (salicyclic acid), GABA (r-Aminobutyric acid), glucan (Glucan), ER (Ergosterol), and AZA (Azelaic acid) were used. Only the use of acibenzolar-S-methyl is according to the invention. Injection of the chemicals was carried out by trunk injection method, i.e., at an angle of 45°, a borehole was created by using an electric drill with thickness of 1.5 mm on a pine stem part that is 5 to 10 cm above the soil surface, a tip (200 *µ*ℓ) was inserted to the hole, and, after dissolving the candidate material at concentration level of 200, 20, or 2 *µ*g/mℓ in each solvent, the solution was injected in an amount of 100 *µℓ* per pine tree. After the injection of the chemical agent, the end part of the tip was sealed with parafilm.

The pine tree wilt nematodes (*Bursaphelenchus xylophilus,* National Institute of Forest Science (NIFoS), South Korea) was incubated at 25°C by feeding them with *Botrytis cinerea,* which have been cultured on a potato dextrose agar (PDA) medium, and after one week incubation, they were collected by Baermann funnel method and were adjusted to the level of 20,000 worms/mℓ by examining the number of the worms under an optical microscope. One week after the chemical treatment, the inoculation of the pine tree wilt nematodes was carried out by tree barking inoculation of 100 *µℓ*, i.e., 2,000 worms, per tree, and the result was determined 30 days after the inoculation. As a result, as it is shown in Table 1, ASM and ASM 50% (WG, Water Dispersible Granule) exhibited the highest activity at all concentrations of 200, 20, and 2 *µ*g/mℓ.

**[Table 1] Occurrence rate of pine wilt disease in candidate group of induced resistance materials**

| Material | Concentration (*µ*g/mℓ) | | |
|---|---|---|---|
| | 200 | 20 | 2 |
| ASM | 0/3 | 1/3(1)* | 1/3(1) |
| ASM 50%, WG | 0/3 | 0/3 | 0/3 |
| TDL | 1/3(1) | 2/3(2) | 3/3(3) |
| ITL | 1/3(1) | 2/3(2) | 2/3(1) |
| PBZ | 1/3(1) | 0/3 | 2/3(1) |
| AZO | 2/3(2) | 2/2(1) | 0/3 |
| VMA | 2/3(1) | 1/3(1) | 2/3(2) |
| MeJA | 2/3(2) | 2/3(1) | 3/3(1) |
| BABA | 2/3(2) | 3/3(2) | 2/3(2) |
| 2,3-BDO | 1/3(1) | 3/3(1) | 2/3(2) |
| SA | 0/3 | 1/3 | 2/3 |
| GABA | 0/3 | 1/3(1) | 3/3(1) |
| Glucan | 2/3 | 1/3(1) | 1/3(1) |
| ER | 1/3 | 0/3 | 3/3(1) |
| AZA | 2/3(2) | 2/3(1) | 2/3 |
| Untreated control | 3/3(2) | | |
| Uninoculated control | 0/3 | | |

| | | | |
|---|---|---|---|
| a/b(c)*: (a) - Number of pine trees showing wilt symptoms, (b) - Number of pine trees used for the test, (c) - Number of pine trees showing wilt symptoms only at growing points of a stem among (a) the pine trees showing wilt symptoms. | | | |

### Example 2. In vitro determination of nematicidal effect by acibenzolar-S-methyl

The nematicidal activity of acibenzolar-*S*-methyl, which has been shown to exhibit the highest effect, was determined in Example 1. To test the nematicidal activity of acibenzolar-*S*-methyl, a suspension of *Bursaphelenchus xylophilus* was diluted in a 96-well microplate to have 50 worms/99 *µℓ* in each well and used for the treatment. Acibenzolar- *S*-methyl was prepared as a stock solution (100 times of the treatment concentration) in acetone solvent and was treated at the concentration of 300, 100, or 33.3 *µ*g/mℓ by adding stock solution of 1 *µℓ* for each treatment. Each treatment was repeated 3 times, and "A Pharm" (emamectin benzoate, 2.15%), which is a chemical pesticide, was used as a control group. After the treatment, the 96-well plate was kept in a plastic box having water-soaked wipes spread on the bottom to maintain 100% humidity, and, after covering the box with black cloth, the box was stored in a dark state with blockage of light. The observation was made after 3 days. As a result, it was shown that acibenzolar-S-methyl has no nematicidal activity for the second stage larvae of *Bursaphelenchus xylophilus.*

**[Table 2] Nematicidal activity of acibenzolar-S-methyl against Bursaphelenchus xylophilus**

| Material | Concentration (*µ*g/mℓ) | Nematicidal rate (%) |
|---|---|---|
| Acibenzolar-S-methyl | 300 | 2.24 |
| | 100 | 1.94 |
| | 33.3 | 1.72 |
| Emamectin benzoate | 1 | 100 |
| | 0.33 | 100 |
| | 0.11 | 98.77 |
| Untreated control | Acetone 1% | 0.76 |
| | Water 1% | 2.15 |

### Example 3. The control efficacy of acibenzolar-S-methyl by various treatment methods against pine wilt disease in greenhouse

The control efficacy of acibenzolar-S-methyl, which shown to have the highest activity in Example 1, was determined by three different treatment methods, i.e., trunk injection, foliar spraying, and soil drenching. For *in vivo* pathogenesis test, 2-year old young red pine trees (diameter of 5.5 mm or so, and height of about 35 mm) were used like Example 2.

For the trunk injection, a borehole was created at an angle of 45° by using an electric drill with thickness of 1.5 mm on a pine stem part that is 5 to 10 cm above the soil surface, a tip (200 *µℓ*) was inserted to the hole, and the working solution of chemicals was injected in an amount of 100 *µℓ* per pine tree after dissolving acibenzolar-S-methyl at concentration of 0.2 or 10 mg/mℓ in an aqueous solution containing 10% acetone and 10% methanol. After the treatment, the end part of the tip was sealed with parafilm, and a small hole was created thereon as an airflow hole. For the foliar spraying, a pre-treatment with Tween 20 (250 *µ*g/mℓ) was carried out at 5 mℓ per pine tree to help the adsorption of the chemical on pine leaves, followed by drying for 2 hours. After drying, acibenzolar-S-methyl was dissolved at concentration of 1.6 mg/mℓ in an aqueous solution containing 10% acetone and Tween 20 (250 *µ*g/mℓ) and the dissolved solution was filled in microsprayer and was applied 5 mℓ per pine tree by foliar spraying. For the soil drenching, acibenzolar-S-methyl was dissolved at concentration level of 0.2 mg/mℓ in an aqueous solution containing 10% acetone and Tween 20 (250 *µ*g/mℓ), and this solution was used for soil drenching in a pot with planted pine tree, 40 mℓ per pine tree. One week after the chemical treatment, inoculation of *Bursaphelenchus xylophilus* was carried out in the same manner as Example 1, and then wilting level of the pine tree was observed for 80 days.

**[Table 3] The control efficacy of acibenzolar-S-methyl against pine wilt disease by various treatment methods**

| Material | Treatment method | Concentration (*µ*g/mℓ) | Disease occurrence rate (%) | Control value (%) |
|---|---|---|---|---|
| Acibenzolar-S-methyl | Trunk injection | 10,000 | 52 | 27 |
| | | 200 | 16 | 77 |
| | Soil drenching | 200 | 2 | 97 |
| | Foliar spraying | 1,600 | 28 | 61 |
| Emamectin | Trunk injection | 20,000 | 0 | 100 |
| benzoate | | 200 | 66 | 7 |
| | Soil drenching | 200 | 70 | 1 |
| | Foliar spraying | 1,600 | 64 | 10 |
| Untreated control | - | - | 71 | 0 |
| Uninoculated control | - | - | 0 | - |

As a result, the trunk injection was shown control value of 27% and 77% at 10,000 *µ*g/mℓ and 200 *µ*g/mℓ, respectively. From the result showing that the higher activity is exhibited at lower concentration, it is believed that this phenomenon is based on induced resistance rather than the nematicidal activity of acibenzolar-*S*-methyl. Furthermore, a high control value of 61% and 97% was shown by the foliar spraying and soil drenching of acibenzolar-*S*-methyl, respectively. On the other hand, in case of emamectin benzoate by trunk injection, which is most widely used as a nematicidal agent for trunk injection, the controlling effect was not shown at all at 200 *µ*g/mℓ while the high controlling effect of 100% was shown at 20,000 *µ*g/mℓ. Moreover, emamectin benzoate by foliar spraying and soil drenching has no control activity against pine wilt disease. It seems that emamectin benzoate cannot permeate into a pine tree by soil drenching or foliar spraying, or it just permeates at extremely low concentration. Since acibenzolar-S-methyl can exhibit the controlling effect not only by trunk injection but also by foliar spraying and soil drenching, it is expected that, if an optimal formulation is prepared, a product which can apply as an aerial spraying agent can be also developed.

### Example 4. In vitro determination of induced resistance activity of induced resistance materials using the expression analysis of defense resistance-related genes

For *in vitro* analysis of induced resistance, the expression of PR genes and other plant defense-related genes was determined, which are evolved in various defense mechanisms including induced resistance. The primers of sixteen induced resistance-related genes of pine tree used in this invention were listed in the below and elongation factor_1 alpha were used as a reference gene.

**[Table 4] The primer list of defense resistance-related genes**

| Induced resistance-related gene | Forward primer (SEQ ID NO) | Reverse primer (SEQ ID NO) | Size |
|---|---|---|---|
| PR_1b family | | | 125 |
| PR_2_family (beta-1,3-glucanase) | | | 130 |
| PR 3 family (class I chitinase) | | | 120 |
| PR_3_family (class 4 chitinase) | | | 90 |
| PR_4_family | | | 90 |
| PR_5_family (thaumatin-like) | | | 96 |
| PR_6_family (proteinase inhibitor) | | | 90 |
| PR_9_family (peroxidase) | | | 118 |
| PR_10_family (ribonuclease-like) | | | 90 |
| Antimicrobial peptide | | | 90 |
| Cytochrome_P450 | | | 95 |
| Extensin | | | 110 |
| Heat shock protein 70 | | | 130 |
| Hydroxyproline-rich glycoprotein precursor | | | 140 |
| Metallothionein_like _protein | | | 120 |
| Xyloglucan_endotran sglycosylase | | | 121 |
| | | | |
| Elongation factor_1 alpha | | | 130 |

After the treatment with 200 *µ*g / mℓ of candidates of the selected induced resistance material, expression of the induced resistance-related gene in pine callus was determined by qRT-PCR using the primer pairs of defense resistance-related genes in Table 4. As a candidate group of an induced resistance material in pine tree, acibenzolar-S-methyl (ASM), TDL (Tiadinil), ITL (Isotianil), PBZ (Probenzole), AZO (Azoxystrobin), VMA (Validamycin A), MeJA (Methyl jasmonate), BABA (DL-3-aminobutyric acid), 2,3-BDO (2,3-Butanediol), GABA (r-Aminobutyric acid), glucan (Glucan), ER (Ergosterol), and AZA (Azelaic acid) were used. For the *in vitro* analysis of the expression of induced resistance gene in pine callus, the selected induced resistance materials were applied with 500 *µ*ℓ of LM liquid medium on a surface of pine tree callus (100 mg) in 12-well microplate to give final concentration of 200 *µ*g/mℓ. Then, the callus surface was sufficiently reacted for 24 hours with the candidate of pine tree induced resistance material by shaking at 50 rpm in a 25 °C shaking incubator under dark condition. RNAs were extracted from the callus after completion of the reaction with an induced resistance material, followed by synthesis of cDNAs. Then, by carrying out qRT-PCR, the expression of induced resistance genes was determined.

**[Table 5] Expression of induced resistance gene in pine tree callus by TDL, PBZ, ASM, ITL, AZO, VMA, glucan, and AZA**

| Induced resistance-related gene | Material | | | | | | | |
|---|---|---|---|---|---|---|---|---|
| | TDL | PBZ | ASM | ITL | AZO | VMA | Glucan | AZA |
| PR_1b family | 1.05 | 0.26 | 2 | 1.77 | 1.66 | 0.73 | 1.48 | 1.15 |
| PR_2 family | 0.98 | 0.46 | 1.65 | 1.48 | 1.8 | 0.83 | 1.16 | 1.02 |
| PR_3 family class 1 | 0.82 | 1.04 | 2.04 | 0.95 | 1.11 | 1.67 | 1.32 | 1.12 |
| PR_3 family class 4 | 1.22 | 0.74 | 3.86 | 0.81 | 1.01 | 2.95 | 1.99 | 1.16 |
| PR_4 family | 1.24 | 0.46 | 2.6 | 1.39 | 2.04 | 1.43 | 1.33 | 0.99 |
| PR_5 family | 1.33 | 1.99 | 2.93 | 0.95 | 1.52 | 4.66 | 1.47 | 1.45 |
| PR_9 family | 1.48 | 2.52 | 2 | 1.88 | 1.92 | 1.37 | 0.52 | 1.27 |
| PR_10 family | 1.19 | 2.08 | 1.71 | 1 | 1.4 | 1.56 | 0.79 | 1.16 |
| Antipeptide | 0.64 | 1.11 | 1.83 | 0.75 | 0.69 | 2.36 | 1.71 | 1.43 |
| Cytochrome_P450 | 0.91 | 1.06 | 1.71 | 0.98 | 1.17 | 1.17 | 1.23 | 1.05 |
| Extensin | 1.05 | 1.62 | 2.1 | 1.39 | 2.01 | 0.66 | 1.1 | 1.15 |
| Heat shock 70 | 0.29 | 0.73 | 1.75 | 0.43 | 0.38 | 2.19 | 1.47 | 1.42 |
| Hydroxyproline | 0.97 | 1.21 | 1.79 | 0.72 | 1.11 | 2.31 | 0.97 | 0.9 |
| Metallothionein | 0.1 | 0.25 | 0.11 | 0.09 | 0.14 | 0.99 | 3.86 | 1.97 |
| Xyloglucan | 1.23 | 1.41 | 2.36 | 0.97 | 1.93 | 1.99 | 1.01 | 0.76 |

**[Table 6] Expression of induced resistance gene in pine tree callus by MeJA, BABA, ER, GABA, and 2,3 BD**

| Induced resistance-related gene | Material | | | | |
|---|---|---|---|---|---|
| | MeJA | BABA | ER | GABA | 2,3 BD |
| PR_1b family | 0.5 | 0.48 | 1.14 | 1.78 | 4.36 |
| PR_2 family | 0.47 | 0.43 | 1.17 | 1.66 | 1.26 |
| PR_3 family class 1 | 0.54 | 0.81 | 1.06 | 3.07 | 2.78 |
| PR_3 family class 4 | 0.79 | 0.51 | 0.81 | 8.75 | 0.33 |
| PR_4 family | 5.86 | 7.01 | 1.13 | 1.95 | 1.41 |
| PR_5 family | 0.95 | 0.92 | 1.05 | 3.78 | 1.13 |
| PR_9 family | 0.47 | 0.43 | 1.35 | 0.7 | 1.22 |
| PR_10 family | 1.34 | 1.23 | 1.21 | 1.57 | 0.86 |
| Antipeptide | 0.43 | 0.4 | 2.11 | 1.13 | 1.31 |
| Cytochrome_P450 | 0.3 | 0.37 | 1.06 | 2.41 | 0.88 |
| Extensin | 0.93 | 0.78 | 1.06 | 1.83 | 1.07 |
| Heat shock 70 | 0.69 | 0.59 | 1.91 | 2.58 | 1.29 |
| Hydroxyproline | 0.53 | 0.36 | 1.42 | 5.98 | 0.83 |
| Metallothionein | 0.21 | 1.17 | 1.37 | 0.92 | 2.53 |
| Xyloglucan | 0.44 | 0.53 | 1.05 | 3.46 | 1.13 |

As a result, as shown in Table 5 and Table 6, it was found that ASM, GABA and VMA are the materials that the expression of induced resistance-related genes is induced by 2 times or higher overall at concentration of 200 *µ*g/mℓ. In particular, expression of most PR genes was enhanced by 2 times or more by ASM.

### Example 5. Gene expression by culture time after treatment with acibenzolar-S-methyl

Based on the results of assay using young plants and gene expression by selected induce resistance materials, it seemed that acibenzolar-S-methyl had the most excellent effect. Thus, the following tests were carried out using acibenzolar-S-methyl only. Expression of the induced resistance genes at different culture time after the chemical treatment was examined. For the *in vitro* assay, LM medium containing pine tree callus was treated with acibenzolar-S-methyl at concentration of 200 *µ*g / mℓ, followed by reaction for 1 day, 7 days, or 14 days in a 25°C shaking incubator under dark condition. RNAs were extracted from the callus after the reaction followed by synthesis of cDNAs. Then, by carrying out qRT-PCR, the expression of the induced resistance genes was determined. Depending on reaction time after the treatment, i.e., after 1 day, 7 days, or 14 days, the expression of the obtained induced resistance genes was examined. As a result of the *in vitro* callus assay depending on reaction time after the treatment with acibenzolar-S-methyl, the expression of the induced resistance-related genes is the highest at 1 day after the treatment with acibenzolar-S-methyl and gradually diminished over time, as it is shown in Table 7. In this regard, it is contemplated that the expression of genes acquired by acibenzolar-*S*-methyl is not maintained in highly expressed state until the pathogen invasion and just memorized with at minimum level so that the energy consumption by plant can be efficiently managed.

**[Table 7] Expression of induced resistance gene in pine tree callus by acibenzolar-S-methyl depending on reaction time**

| Induced resistance-related gene | Gene expression level | | |
|---|---|---|---|
| | After 1 day | After 7 days | After 14 days |
| PR_1b family | 6.28 | 0.72 | 0.4 |
| PR_2 family | 5.5 | 0.97 | 0.42 |
| PR_3 family class 1 | 2.85 | 1.38 | 0.29 |
| PR_3 family class 4 | 11.96 | 7.67 | 0.86 |
| PR_4 family | 5.46 | 0.74 | 0.2 |
| PR_5 family | 5.9 | 0.45 | 0.17 |
| PR_9 family | 1 | 1 | 1 |
| PR_10 family | 8.57 | 0.51 | 0.64 |
| Antipeptide | 10.63 | 1.28 | 0.58 |
| Cytochrome_P450 | 7.21 | 0.85 | 0.04 |
| Extensin | 9.99 | 1.23 | 0.33 |
| Heat shock 70 | 2.27 | 0.97 | 0.77 |
| Hydroxyproline | 10.06 | 1.2 | 0.32 |
| Metallothionein | 7.89 | 0.41 | 0.29 |
| Xyloglucan | 29.86 | 2.81 | 1.06 |

Furthermore, as a result of the *vitro* induced resistance test using pine tree callus depending on concentration of acibenzolar-S-methyl, the high gene expression was generally shown by the treatment at concentration of 200 and 20 *µ*g/mℓ as it is described in Table 8. Interestingly, even if the concentration of acibenzolar-*S*-methyl is diluted 10-fold, the decrease in the expression of induced resistance gene was not proportional but slightly decreased. In addition, several induced resistance genes were shown to have even higher gene expression at the lower concentrations. This result corresponds to one characteristic of the induced resistance, and it indicates that the disease controlling effect can be maximized by inducing the expression of resistance gene at low concentrations.

**[Table 8] Expression of induced resistance gene in pine tree callus by the concentration of acibenzolar-S-methyl**

| Induced resistance-related gene | Gene expression level | | |
|---|---|---|---|
| | 200 *µ*g/mℓ | 20 *µ*g/mℓ | 2 *µ*g/mℓ |
| PR_1b family | 0.939523 | 1.248331 | 1.06437 |
| PR_2 family | 1.117287 | 2.694467 | 1.827663 |
| PR_3 family class 1 | 3.605002 | 3.506423 | 3.944931 |
| PR_3 family class 4 | 24.93327 | 42.51795 | 32.22258 |
| PR_4 family | 1.239708 | 2.056228 | 2.250117 |
| PR_5 family | 2.80889 | 8.514961 | 4 |
| PR_9 family | 0.952638 | 0.790041 | 0.752623 |
| PR_10 family | 1.094294 | 1.109569 | 0.82932 |
| Antipeptide | 5.35171 | 7.110741 | 5.81589 |
| Cytochrome_P450 | 1.231144 | 1.172835 | 1.231144 |
| Extensin | 1.693491 | 1.385109 | 0.90125 |
| Heat shock 70 | 53.44563 | 23.26356 | 22.47112 |
| Hydroxyproline | 4.626753 | 4.438278 | 3.138336 |
| Metallothionein | 0.926588 | 0.790041 | 0.594604 |
| Xyloglucan | 37.01402 | 5.388934 | 7.012846 |

### Example 6. Expression of resistance gene by different treatments with acibenzolar-S-methyl

To have an *in vitro* assay according to different methods of treatment with acibenzolar-S-methyl, two separate treatment methods, i.e., surface treatment (spraying treatment) of pine tree callus and direct application of the induced resistance material to an LM medium containing pine tree callus, were performed. For the surface treatment (spraying treatment) of pine tree callus, 100 mg of the pine tree callus were dunked in 500 *µ*ℓ LM liquid medium and 500 *µ*ℓ of 400 *µ*g/mℓ acibenzolar-*S*-methyl were sprayed (i.e., sprayed 5 times, 100 *µℓ* for each spraying, 200 *µ*g/mℓ) on the callus surface. Then, the pine callus sprayed with acibenzolar-*S*-methyl was reacted for 24 hours by shaking at 50 rpm in a 25°C shaking incubator under dark condition. After the completion of the 24-hour reaction, RNAs were extracted from the callus followed by synthesis of cDNAs. Then, by carrying out qRT-PCR, expression of the induced resistance gene was determined.

LM gelite medium as a growth medium for pine tree callus was treated with acibenzolar-*S*-methyl to give final concentration of 200 *µ*g/mℓ of acibenzolar-S-methyl. In a 25°C shaking incubator under dark condition, the pine tree callus (100 mg) was reacted for 24 hours in the LM gelite medium containing 200 *µ*g / mℓ acibenzolar-S-methyl, and then RNAs were extracted from the callus, followed by synthesis of cDNAs. Then, by carrying out qRT-PCR, the expression of the induced resistance gene was determined.

As shown in Table 9 that, at the same concentration, the LM medium which contained acibenzolar-S-methyl as a medium component expressed induced resistance-related genes more efficient and higher in pine callus compared to the surface treatment (spraying treatment) of pine tree callus.

**[Table 9] Expression of induced resistance gene in pine tree callus by different treatment with acibenzolar-S-methyl**

| Induced resistance-related gene | Treatment methods of ASM | |
|---|---|---|
| | Direct supplying as a medium component | Spraying |
| PR_1b family | 6.28 | 2 |
| PR_2 family | 5.5 | 1.65 |
| PR_3 family class 1 | 2.85 | 2.04 |
| PR_3 family class 4 | 11.96 | 3.86 |
| PR_4 family | 5.46 | 2.6 |
| PR_5 family | 5.9 | 2.93 |
| PR_9 family | 8.57 | 2 |
| PR_10 family | 10.63 | 1.71 |
| Antipeptide | 7.21 | 1.83 |
| Cytochrome_P450 | 9.99 | 1.71 |
| Extensin | 2.27 | 2.1 |
| Heat shock 70 | 10.06 | 1.75 |
| Hydroxyproline | 7.89 | 1.79 |
| Metallothionein | 29.86 | 0.11 |
| Xyloglucan | 17.51 | 2.36 |

### Example 7. Disease control efficacy of acibenzolar-S-methyl formulation against pine wilt disease in greenhouse

To examine the disease control efficacy of acibenzolar-*S*-methyl formulation against pine wilt disease, acibenzolar-S-methyl was formulated with the following composition; 5% of acibenzolar-*S*-methyl, 10% of propylene glycol as surfactant, 2% of CR-KSP40M (polyethoxylated tristyrylphenyl ether, phosphate, potassium salt), 0.1% of xanthan gum, 0.1% of defoamer, and 82.8% of water.

The *in vivo* test of pine wilt disease in greenhouse using the acibenzolar-S-methyl formulation was carried out by using 2-year old young black pine trees *(Pinus thunbergii)* and red pine trees (diameter of 5.5 mm or so, and height of about 35 mm) to determine the effect on different sensitive pine tree species, and the formulation treatment was performed by foliar spraying or soil drenching. For the foliar spraying, a pre-treatment with Tween 20 (250 *µ*g/mℓ) was carried out at 5 mℓ per pine tree to have good adsorption of the chemical on pine leaves, followed by drying for 2 hours. After drying, acibenzolar-S-methyl was dissolved at concentration level of 1.6 mg/mℓ and was applied by foliar spraying using microsprayer, i.e., 5 mℓ of the solution per pine tree. For the soil drenching, acibenzolar-S-methyl was dissolved at concentration level of 0.2 mg/mℓ, and the working solution was used for soil drenching in a pot with planted pine tree, i.e., 40 mℓ of the solution per pine tree. One week after the formulation treatment, inoculation of *Bursaphelenchus xylophilus* was carried out by tree barking inoculation in the same manner as Example 1, i.e., 2,000 worms per pine tree, and the results were observed after 30 days.

**[Table 10] Disease control efficacy of acibenzolar-S-methyl formulation against pine wilt disease**

| Material | Treatment | Tree type | Concentration | Disease | Control |
|---|---|---|---|---|---|
| | method | | (*µ*g/mℓ) | severity (%) | value (%) |
| Acibenzolar-S-methyl | Foliar spraying | Black pine tree | 1,600 | 8 | 87 |
| | Soil drenching | | 200 | 38 | 38 |
| | Foliar spraying | Red pine tree | 1,600 | 24 | 76 |
| | Soil drenching | | 200 | 32 | 68 |
| Untreated control | - | - | | 80 | 0 |
| Uninoculated group | - | - | | 0 | - |

The control value of acibenzolar-*S*-methyl formulation by the foliar spraying and soil drenching in black pine tree was 87% and 38%, respectively, compared to the untreated control, as the results are given in Table 10. In red pine tree, the control value of acibenzolar-*S*-methyl formulation by the foliar spraying and soil drenching was 76% and 68% by the foliar spraying and soil drenching, respectively, compared to the untreated control. Thus, it was shown that acibenzolar-*S*-methyl has the controlling effect not only in red pine tree but also in black pine tree, and this result indicates that the range of application on susceptible pine tree types may be wide when the formulation is used for controlling the pine wilt disease.

## Claims

1. Use of a composition comprising acibenzolar-*S*-methyl or an agrochemically acceptable salt thereof as an effective component for controlling pine wilt disease in plant.

2. The use according to Claim 1, wherein the plant belongs to genus *Pinus,* genus *Abies,* genus *Picea,* or genus *Larix.*

3. A method for controlling pine wilt disease comprising treating a tree planting plot or field with a composition comprising acibenzolar-*S*-methyl or an agrochemically acceptable salt thereof as an effective component.

4. The method according to claim 3, wherein the tree belongs to genus *Pinus,* genus *Abies,* genus *Picea,* or genus *Larix.*

5. The method according to Claim 3 or 4, wherein the treating with the composition for controlling pine wilt disease elicits induced resistance of a pine tree.

6. The method according to Claim 3 or 4, wherein the treating with the composition for controlling pine wilt disease is a soil drenching treatment or a foliar spraying treatment.

7. A method for preventing or treating pine wilt disease **characterized by** treating a red pine tree *(Pinus densiflora)* or black pine tree *(Pinus thunbergii)* cultivation plot or field with a composition comprising acibenzolar-*S*-methyl or an agrochemically acceptable salt thereof as an effective component.

8. Use of a composition comprising acibenzolar-*S*-methyl or an agrochemically acceptable salt thereof as an effective component for soil drenching or foliar spraying treatment to control pine wilt disease.

9. Use of a composition comprising acibenzolar-*S*-methyl or an agrochemically acceptable salt thereof as an effective component for eliciting induced resistance against pine wilt disease.

## Patentansprüche

1. Anwendung einer Zusammensetzung, umfassend Acibenzolar-S-methyl oder ein agrochemisch unbedenkliches Salz davon als wirksame Komponente zur Bekämpfung der Kiefernwelke-Krankheit in Pflanzen.

2. Anwendung nach Anspruch 1, wobei die Pflanze zur Gattung Pinus, zur Gattung Abies, zur Gattung Picea oder zur Gattung Larix gehört.

3. Verfahren zur Bekämpfung der Kiefernwelke-Krankheit, umfassend die Behandlung einer Baumpflanzung oder eines Feldes mit einer Zusammensetzung, die Acibenzolar-S-methyl oder ein agrochemisch unbedenkliches Salz davon als wirksame Komponente umfasst.

4. Verfahren nach Anspruch 3, wobei der Baum zur Gattung Pinus, zur Gattung Abies, zur Gattung Picea oder zur Gattung Larix gehört.

5. Verfahren nach Anspruch 3 oder 4, wobei die Behandlung mit der Zusammensetzung zur Bekämpfung der Kiefernwelke-Krankheit eine induzierte Resistenz eines Kiefernbaums auslöst.

6. Verfahren nach Anspruch 3 oder 4, wobei es sich bei der Behandlung mit der Zusammensetzung zur Bekämpfung der Kiefernwelke-Krankheit um eine Bodenbewässerungs- oder eine Blattbesprühbehandlung handelt.

7. Verfahren zur Vorbeugung oder Behandlung der Kiefernwelke-Krankheit, **dadurch gekennzeichnet, dass** eine Rotkiefer (Pinus densiflora) oder eine Schwarzkiefer (Pinus thunbergii) mit einer Zusammensetzung behandelt wird, die Acibenzolar-S-methyl oder ein agrochemisch unbedenkliches Salz davon als wirksame Komponente umfasst.

8. Anwendung einer Zusammensetzung, umfassend Acibenzolar-S-methyl oder ein agrochemisch unbedenkliches Salz davon, als wirksame Komponente für eine Bodenbewässerungs- oder Blattbesprühbehandlung zur Bekämpfung der Kiefernwelke-Krankheit.

9. Anwendung einer Zusammensetzung, umfassend Acibenzolar-S-methyl oder ein agrochemisch unbedenkliches Salz davon als wirksame Komponente zur Auslösung einer induzierten Resistenz gegen die Kiefernwelke-Krankheit.

## Revendications

1. Utilisation d'une composition comprenant de l'acibenzolar-S-méthyle ou un sel acceptable sur le plan agrochimique de celui-ci en tant que composant efficace pour lutter contre la maladie de dépérissement du pin chez des végétaux.

2. Utilisation selon la revendication 1, dans laquelle le végétal appartient au genre Pinus, genre Abies, genre Picea ou genre Larix.

3. Procédé de lutte contre la maladie de dépérissement du pin, comprenant le traitement d'une parcelle ou d'un champ de plantation d'arbres avec une composition comprenant de l'acibenzolar-S-méthyle ou un sel acceptable sur le plan agrochimique de celui-ci en tant que composant efficace.

4. Procédé selon la revendication 3, dans lequel l'arbre appartient au genre Pinus, genre Abies, genre Picea ou genre Larix.

5. Procédé selon la revendication 3 ou 4, dans lequel le traitement par la composition pour lutter contre la maladie de dépérissement du pin provoque la résistance induite d'un pin.

6. Procédé selon la revendication 3 ou 4, dans lequel le traitement par la composition pour lutter contre la maladie de dépérissement du pin est un traitement de trempage du sol ou un traitement de pulvérisation foliaire.

7. Procédé de prévention ou de traitement de la maladie de dépérissement du pin, **caractérisé par** le traitement d'une parcelle ou d'un champ de culture de pin rouge (Pinus densiflora) ou de pin noir (Pinus thunbergii) par une composition comprenant de l'acibenzolar-S-méthyle ou un sel acceptable sur le plan agrochimique de celui-ci en tant que composant efficace.

8. Utilisation d'une composition comprenant de l'acibenzolar-S-méthyle ou un sel acceptable sur le plan agrochimique de celui-ci en tant que composant efficace pour un traitement par trempage du sol ou par pulvérisation foliaire pour lutter contre la maladie de dépérissement du pin.

9. Utilisation d'une composition comprenant de l'acibenzolar-S-méthyle ou un sel acceptable sur le plan agrochimique de celui-ci en tant que composant efficace pour provoquer la résistance induite contre la maladie de dépérissement du pin.
